# EUROPEAN PATENT SPECIFICATION

(11) **EP 0 294 158 B1**
(45) Date of publication and mention of the grant of the patent: **01.12.1993**
(21) Application number: 88304955.3
(22) Date of filing: 31.05.1988
(51) Int. Cl.: G01V 1/40, G01V 1/20

(54) **Method of vertical seismic profiling**
Verfahren zum Messen eines vertikalen seismischen Profils
Procédé d'obtention d'un profil sismique vertical

(30) Priority: 02.06.1987 NO 872316
(43) Date of publication of application: 07.12.1988
(73) Proprietor: GECO A.S., N-1300 Sandvika (NO)
(72) Inventor: Desler, James F., Kingswood Texas 77339 (US); Farmer, Paul A., 0576 Houston Texas 77027 (US); Haldorsen, Jakob, N-0755 Oslo 7 (NO)
(74) Representative: Robinson, John Stuart

(56) References cited:
- EP-A- 0 206 457
- EP-A- 0 273 722
- US-A- 4 363 112
- US-A- 4 460 059

## Description

The invention relates to a method of vertical seismic profiling of formations in a drilling operation using a drill bit as a source of seismic energy. It is thus possible to conduct such vertical seismic profiling without interrupting the drilling operation.

Vertical seismic profiling is usually done by pulling a drill string out of a drilling hole, then lowering a seismic listening device (geophone) into the hole, and listening to or recording the acoustic energy transmitted from a seismic source at the surface. This operation involves a stop or break in drilling activity and, thus, a significant increase in the cost of the drilling operation in addition to the cost of the actual profiling operation.

In order to simplify profiling techniques, attempts were made to provide sources of seismic energy, both of vibratory and impulsive kind, to be placed downhole. In all these cases, knowledge of the source signature was required for processing the data. Such knowledge of the source signature may, however, be unreliable due to varying coupling of the source to the walls of the well.

Various methods were proposed to avoid this problem, involving use of arbitrary unknown buried sources and surface recording. US-PS Nos. 2 451 515 and 3 739 871 disclose examples of these.

According to US-PS No. 2 452 515, surface recording of noise generated by the drill bit is used for information on the nature of the material of the formation that is actually being drilled by the bit. The method according to this specification, however, gives only this information, and there is no disclosure of how this technique may be extended, or how the drill bit may be used as a source of energy in such a manner that it permits analysis of other areas of formation, i.e. it is not possible to separate sound from different sources.

US-A-4 363 112 discloses an arrangement which examines the strength of the harmonic signal powers of the received signal. Seismic energy generated by a drill bit is used for detecting of a nearby gas reservoir. There is no extraction of the signature of an inaccessible seismic energy source.

According to US-PS No. 3 793 871, a buried or submersed source is used and sound signals are recorded on the surface. The method disclosed in this latter specification will only work with impulsive sources, and the acoustic waves are formed by hydraulic fracturing. There is an array of geophones on the surface, and the sound signals received are used to determine accurately the location of fracturing and the degree of fracturing. There is, thus, no attempt made at achieving seismic reflection data.

According to the invention, there is provided a method as defined in the appended Claim 1.

It is thus possible to provide a method of vertical seismic profiling to determine the local geology surrounding a drilling well. It is also possible to permit such profiling to be carried out without any break in drilling operations using the drill bit itself as a source of seismic energy, which has advantages, both economically and operationally.

In a preferred embodiment, measurements are made or profiling is done during the actual drilling operation, the sound from the drill bit with reflections of the sound in the formation being recorded by a geometrically extended array constructed of single receiver elements which are arranged in a predetermined matrix group. The signals received are analysed according to principles known per se on the basis of differences of arrival times, permitting determination of the signature of the drill bit at any desired location during drilling operations. The remaining received signal frequencies and amplitudes are analysed with reference to their deviation as to time, frequency, and/or waves, the signals being grouped according to differences corresponding to focusing of certain areas in the formation.

The geometrical extent of the direction of width/length is preferably of the same order of size as the assumed, approximate depth of the drill bit.

A preferred array for use with such a method comprises separate receiver elements arranged in a regular matrix group in an area on the surface of the formation at the drilling site. The array is connected with a unit for storage and analysis of the received signals. The receivers may be arranged in a rectangular pattern in rows and columns. The extent of the array in the directions of width and length is of the same order of size as the depth of the drill bit.

Previous knowledge of the signature of the seismic source is not required as the signature can be deduced from the data recorded on the surface. This permits the use of any arbitrary generator of sound that may be placed at a desired location.

The principles of signal analysis "known per se" mainly relate to migration, and are for instance as described in Claerbout, J.F. and Doherty, S.M., 1972 "Downward Continuation of Moveout Corrected Seismograms", Geophysics Vol. 37, pp 741-468. This is, in principle, a focusing technique.

The invention is fundamentally different from each of the methods disclosed in the above mentioned two US patents, and from a combination of these methods as well, even though the location of the drill bit is determined, and its signature is extracted, because a three-dimensional technique of focusing is used, which is rendered possible by utilization of a receiver matrix extending over a larger area. Also, utilization of the matrix permits a seismic section of reflection to be formed by sequential correlation and deconvolution of the recorded data.

The invention will be further described, by way of example, with reference to a preferred embodiment thereof.

A drill bit continuously makes acoustic noise by drilling or grinding material that surrounds the bit. The acoustic energy is subjected to the same reflections and refractions with different acoustic conditions in the geology as would be the energy emitted from a specially built seismic source.

A matrix of receiver elements or listening elements at the surface records the energy transmitted directly from the drill bit to the surface, as well as energy reflected by acoustic inhomogeneities in the geology or formation. The energy emitted from the drill bit at each given point arrives at the different receiver elements in the matrix at different times, the relative delays being determined by the differences in propagation paths and the seismic velocity of the transmitting medium. By exercising delays on the data recorded by the separate receiver elements in the matrix, it is possible to focus the array formed by the elements on any volume element in the formation and to record the sound from that volume. By focusing the array on the drill bit, it is possible to extract the previously unknown acoustic signature of the drill bit. When this signature is known, the data can be processed by use of standard correlation and deconvolution techniques in the same manner as used for data recorded with the use of seismic oscillators.

Instead of using time delays for focusing the array, it is possible to use phase displacement after the data have been transformed to frequency and wavenumber domain from time and space. Both these techniques are mathematically equivalent.

The geometrical matrix or array consisting of a number of receiver elements must have a comparatively large area in all directions of the plane. The array normally has the same order of size in breadth and length as the assumed approximate depth of the drill bit. In the array, the separate receiver elements are preferably provided in a regular pattern or matrix and are preferably provided at the surface close to the drilling site. The separate receiver elements of the array are either connected to a storage unit for the extracted data or to an analysing unit. If measurements are made at sea, the array is deployed on the sea bed. The receiver elements are preferably arranged in a rectangular pattern of rows and columns.

The following indicates the order of the dimensions of such a matrix or array. The receiver elements should preferably cover an area that is large enough to allow an angle of incidence of at least 45°. with smaller angles than that, the resolution decreases. This requires distribution over approximately 1500 m in case of a well depth of 1500 m. The receiver elements may, in the case of deep wells, be provided along a line of 5 km length which is arranged about the well annulus with the elements at a mutual distance of 25 m, which means approximately 200 receiver channels. An additional parallel line with a corresponding distribution may be provided alongside the first mentioned line. Recordings are normally made at regular intervals during drilling operations.

The recorded data may be analysed by known techniques, including extracting the signature of the drill as mentioned above. Analysis systems that may be used include that described in Claerbout, J.F. and Doherty, S.M., 1972 "Downward Continuation of Moveout Corrected Seismograms", Geophysics Vol. 37. pp. 741-768.

## Claims

1. A method of vertical seismic profiling of a formation surrounding a borehole during a drilling operation, the steps of the method comprising:
producing seismic energy with a drill bit during a drilling operation, the seismic energy being delayed due to the difference of propagating paths of the seismic energy and seismic velocity of the transmitting medium comprising the formation such that the seismic energy from the drill bit arrives at different receivers of an array at different times;
collecting the seismic energy from the drill bit and from reflections of the seismic energy in the formation with the array of receivers, the array of receivers extending in breadth and length on the same order as the depth of the drill bit;
recording data representing the seismic energy in the formation received by each receiver of the array;
analyzing the frequency and amplitude of the recorded data of different receivers of the array to determine time or phase differences which have been created in the recorded data by the formation;
exercising time delays or phase displacements on the recorded data to focus the array of elements on different volumes of the formation;
focusing the receivers of the array on the drill bit;
extracting a previously unknown acoustic signature of the drill bit from the recorded data; and
processing the recorded data using correlation and deconvolution techniques to create a vertical seismic profile of the formation surrounding the borehole.

## Patentansprüche

1. Verfahren zur vertikalen seismischen Profilmessung einer Formation, die ein Bohrloch während eines Bohrvorgangs umgibt, wobei die Schritte des Verfahrens folgendes umfassen:
Erzeugen einer seismischen Energie mit einer Bohrstange während eines Bohrvorgangs, wobei die seismische Energie aufgrund der Unterschiede der Ausbreitungswege der seismischen Energie und der seismischen Geschwindigkeit des Übertragungsmediums, die die Formation umfaßt, derart verzögert wird, daß die seismische Energie von der Bohrstange an verschiedenen, in Reihe angeordneten Empfängern zu verschiedenen Zeiten ankommt,
Aufnehmen der seismischen Energie von der Bohrstange und von Reflektionen der seismischen Energie in der Formation mit der Reihe von Empfängern, wobei sich die Reihe der Empfänger bezogen auf Breite und Länge in der gleichen Größenordnung wie die Tiefe der Bohrstange erstreckt,
Aufzeichnen der Daten, die die seismische Energie in der Formation darstellen, die von jedem Empfänger der Reihe empfangen wird,
Analysieren der Frequenz und der Amplitude der aufgezeichneten Daten der verschiedenen Empfänger der Reihe, um die Zeit- oder Phasenunterschiede zu bestimmen, die in den aufgezeichneten Daten durch die Formation geschaffen worden sind,
Ausüben von Zeitverzögerungen oder Phasenverschiebungen auf die aufgezeichneten Daten, um die Reihe von Elementen auf verschiedene Volumen der Formation zu fokussieren,
Fokussieren der Empfänger der Reihe auf die Bohrstange, Extrahieren einer vorher unbekannten akustischen Kennzeichnung der Bohrstange von den aufgezeichneten Daten, und
Verarbeiten der aufgezeichneten Daten unter Verwendung von Korrelations- und Dekonvolutionsverfahren, um ein vertikales seismisches Profil der Formation zu schaffen, die das Bohrloch umgibt.

## Revendications

1. Procédé d'obtention d'un profil sismique vertical pour une formation entourant un alésage durant une opération de forage les étapes du procédé comprenant:
la production d'une énergie sismique avec un outil de forage durant une opération de forage l'énergie sismique étant temporisée en raison de la différence de trajectoires de propagation de l'énergie sismique et de vitesse sismique du milieu de transmission comprenant la formation, de manière que l'énergie sismique provenant de l'outil de forage atteigne des récepteurs différents d'une matrice, à des moments différents;
la collection de l'énergie sismique provenant de l'outil de forage et de réflexions de l'énergie sismique présente dans la formation, par la matrice de récepteurs, la matrice de récepteurs s'étendant sur la même largeur et longueur que la profondeur de l'outil de forage;
l'enregistrement de données représentant l'énergie sismique présente dans la formation reçue par chaque récepteur de la matrice;
l'analyse de la fréquence et de l'amplitude des données enregistrées de différents récepteurs de la matrice, pour déterminer des différences de temps ou de phase qui ont été produites dans les données enregistrées, par la formation;
la réalisation de retards de temps ou de déplacements de phase sur les données enregistrées, pour focaliser la matrice d'éléments sur des volumes différents de la formation;
la focalisation des récepteurs de la matrice sur l'outil de forage;
l'extraction d'une empreinte acoustique antérieurement inconnue de l'outil de forage, à partir des données enregistrées; et
le traitement des données enregistrées à l'aide de techniques de corrélation et de déconvolution, pour produire un profil sismique vertical de la formation entourant l'alésage.
